# EUROPEAN PATENT APPLICATION

(11) **EP 4 324 363 A1**
(43) Date of publication of application: **21.02.2024**
(21) Application number: 21936673.9
(22) Date of filing: 20.08.2021
(51) Int. Cl.: A47J 36/24, A47J 27/00

(54) **COOKING APPLIANCE**

(30) Priority: 16.04.2021 CN 202120794597 U
(71) Applicant: Foshan Shunde Midea Electrical Heating Appliances Manufacturing Co., Ltd., Foshan, Guangdong 528311 (CN)
(72) Inventor: XUE, Zhaoqiang, Foshan, Guangdong 528311 (CN); LIU, Huayong, Foshan, Guangdong 528311 (CN); LV, Weigang, Foshan, Guangdong 528311 (CN); YANG, Yun, Foshan, Guangdong 528311 (CN); MEI, Ruoyu, Foshan, Guangdong 528311 (CN); WU, Liangliu, Foshan, Guangdong 528311 (CN)
(74) Representative: Whitlock, Holly Elizabeth Ann
(86) International application number: PCT/CN2021/113885
(87) International publication number: WO 2022/217801

(57) **Abstract**

A cooking appliance (600), comprising a pot body (200) and a heating assembly (100), wherein the pot body (200) comprises a first control switch (240); the heating assembly (100) is used for heating the pot body (200), the heating assembly (100) and the pot body (200) are arranged separately, and the heating assembly (100) comprises a control circuit board (30); and the first control switch (240) is associated with the control circuit board (30) so as to control the heating assembly (100), that is, the cooking appliance (600) can control the heating assembly (100) by means of controlling the first control switch (240) on the pot body (200).

## Description

The present application claims priority to Chinese Patent Application No. 202120794597.7, filed on April 16, 2021, entitled "COOKING APPLIANCE", the contents of which are herein incorporated by reference in its entirety.

### TECHNICAL FIELD

The present disclosure relates to the field of household appliance technology, and in particular to a cooking appliance.

### BACKGROUND

In a cooking appliance such as a rice cooker and an electric pressure cooker, when a pot and a heating assembly are detachable, the heating assembly may be generally controlled only by means of operating a control switch (including a knob or a key), which is not very convenient for a user.

### SUMMARY OF THE DISCLOSURE

The present disclosure provides a cooking appliance that is capable of controlling a heating assembly by means of operating a first control switch of a pot.

A first technical solution adopted by the present disclosure is to provide a cooking appliance. The cooking appliance includes a pot, including a first control switch; and a heating assembly, configured to heat the pot and including a control circuit board, where the heating assembly and the pot are arranged separately; where the first control switch is associated with the control circuit board, and the heating assembly is controlled.

In some embodiments, the heating assembly further includes a second control switch electrically connected to the control circuit board, and the first control switch is connected to the second control switch.

In some embodiments, the pot further includes a transmission conductor, and the first control switch is electrically connected to the second control switch via the transmission conductor.

In some embodiments, the first control switch includes: a first touch key, arranged on a surface of the pot; a first touch spring, where an end of the first touch spring is electrically connected to the first touch key, and the other end of the first touch spring is electrically connected to the transmission conductor.

In some embodiments, the first control switch includes a touch conductor, one end of the touch conductor is arranged on a surface of the pot, and the other end of the touch conductor is electrically connected to the transmission conductor.

In some embodiments, the second control switch includes: a second touch key, arranged on a side surface of the heating assembly close to the pot and electrically connected to the transmission conductor; and a second touch spring, where one end of the second touch spring is electrically connected to the second touch key, and the other end of the second touch spring is electrically connected to the control circuit board.

In some embodiments, the pot further includes a transmission member; in response to a control operation of a user, the first control switch is configured to drive the transmission member to trigger the second control switch, and the heating assembly is controlled.

In some embodiments, the second control switch is a touch switch or a membrane switch, and the second control switch is welded on the control circuit board.

In some embodiments, the pot further includes a receiving coil board electrically connected to the first control switch; the heating assembly further includes a transmitting coil board electrically connected to the control circuit board; and the transmitting coil board cooperates with the receiving coil board, such that the first control switch is connected to the control circuit board.

In some embodiments, the first control switch includes: a first touch key, arranged on a surface of the pot, and configured to receive a control operation of a user and generate a corresponding electrical signal; and a first touch spring, one end of the first touch spring being electrically connected to the first touch key; and a touch circuit board, electrically connected to the other end of the first touch spring, where the touch circuit board is electrically connected to the receiving coil board, and the touch circuit board is configured to amplify the electrical signal and transmit an amplified electrical signal to the receiving coil board.

In some embodiments, the transmitting coil board cooperates with the receiving coil board and is further configured to supply power to an electrical component of the pot.

In some embodiments, the heating assembly includes: a heating main body, where a side of the heating main body close to the pot defines a sinking groove, and the transmitting coil board is arranged in the sinking groove; and a decorative member, sleeved on the heating main body and configured to fix the transmitting coil board in the sinking groove.

In some embodiments, the heating assembly includes a heating body, a side post body, and a decorative member, the side post body is arranged on a sidewall of the heating body, and the decorative member is sleeved on the side post body; and the pot includes a pot body and a pot side post, the pot body is arranged correspondingly to the heating body, the pot side post is arranged correspondingly to the side post body, and the first control switch is arranged on the pot side post.

In some embodiments of the present disclosure, the following technical effects may be achieved: the first control switch of the pot is associated with the control circuit board of the heating assembly, that is, by means of establishing a connection between the first control switch of the pot and the control circuit board of the heating assembly, it is possible to control the heating assembly by operating the first control switch of the pot, which is more convenient for the user.

### BRIEF DESCRIPTION OF THE DRAWINGS

To illustrate the technical solutions more clearly in the embodiments of the present disclosure, the following will be briefly described in the description of the embodiments required to use the attached drawings. It is obvious that the following description of the attached drawings are only some of the embodiments of the present disclosure, and those skilled in the art, without creative work, can also obtain other attached drawings based on these drawings.
FIG. 1 is a structural schematic view of a cooking appliance according to some embodiments of the present disclosure.
FIG. 2 is a schematic sectional view of the cooking appliance shown in FIG. 1.
FIG. 3 is another schematic sectional view of the cooking appliance shown in FIG. 1.
FIG. 4 is a structural schematic view of a heating assembly of the cooking appliance shown in FIG. 1.
FIG. 5 is an exploded structural schematic view of the heating assembly shown in FIG. 4.
FIG. 6 is a partial structural schematic view of the heating assembly of the cooking appliance shown in FIG. 1.
FIG. 7 is a structural schematic view of a control circuit board of the heating assembly shown in FIG. 5.
FIG. 8 is another schematic sectional view of the cooking appliance shown in FIG. 1.
FIG. 9 is another schematic sectional view of the cooking appliance shown in FIG. 1.
FIG. 10 is a structural schematic view of a pot of the cooking appliance as shown in FIG. 1.

### DETAILED DESCRIPTION

The present application is further described in detail below in combination with the drawings and embodiments. In particular, the following embodiments are only used to describe the present disclosure, but do not limit the scope of the present disclosure. Similarly, the following embodiments are only part of the present disclosure rather than all of the embodiments. All other embodiments obtained by ordinary technicians in the art without creative work belong to the protection scope of the present disclosure.

Mentioning "embodiments" herein means that a feature, structure, or characteristic described in conjunction with the embodiments may be included in at least one embodiment of the present disclosure. The appearance of the phrase in various places in the specification does not necessarily refer to the same embodiment, nor is it an independent or alternative embodiment mutually exclusive with other embodiments. Those skilled in the art clearly and implicitly understand that the embodiments described herein may be combined with other embodiments.

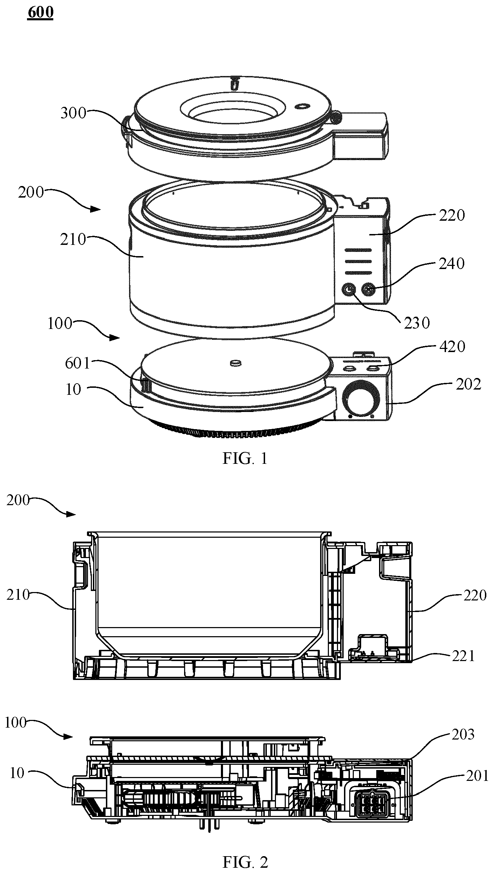

As shown in FIG. 1, FIG. 1 is a structural schematic view of a cooking appliance according to some embodiments of the present disclosure. The cooking appliance 600 described in some embodiments of the present disclosure includes a pot 200 and a heating assembly 100. The pot 200 is configured to accommodate food to be cooked. The heating assembly 100 is configured to heat the pot 200, and the pot 200 is detachably arranged on the heating assembly 100.

In some embodiments, the heating assembly 100 may include a complete heating and control system, and may be used as a separate heating magnetic furnace to achieve multi-functional product requirement. The heating assembly 100 may be arranged with a positioning protrusion or convex block 601, and the pot 200 may be arranged with a positioning groove. The positioning groove is matched with the positioning protrusion 601, so as to limit a relative position of the pot 200 and the heating assembly 100.

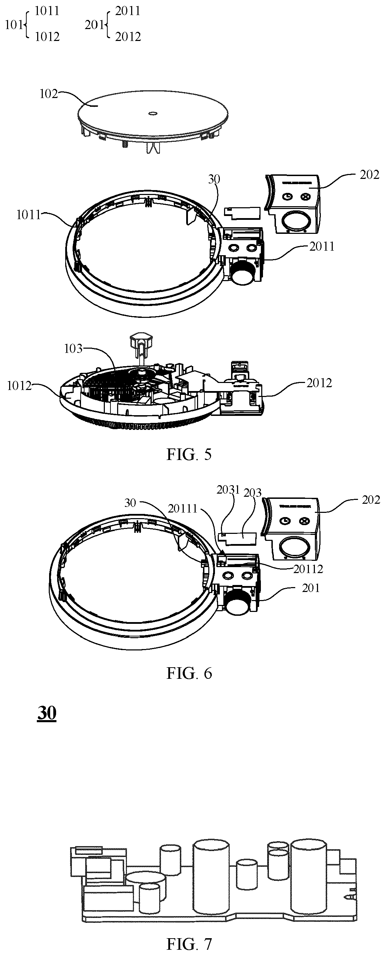

The pot 200 may further be arranged with a first control switch 240. The first control switch 240 may be configured to receive a control operation of a user. The first control switch 240 is connected to a control circuit board 30 (as shown in FIG. 6) of the heating assembly 100, so as to control the heating assembly 100.

In some embodiments of the present disclosure, the first control switch 240 of the pot 200 is associated with the control circuit board 30 of the heating assembly 100, that is, by means of establishing a connection between the first control switch 240 of the pot 200 and the control circuit board 30 of the heating assembly 100, it is possible to control the heating assembly 100 by operating the first control switch 240 of the pot 200, which is more convenient for the user.

In some embodiments, the heating assembly 100 includes a heating main body and a decorative member sleeved on the heating main body. As shown in FIG. 1, the heating main body may include a heating body 10 and a side post body 201 (as shown in FIG. 1, the side post body 201 is covered by a decorative member 202, and the side post body 201 is shown in FIG. 2). The side post body 201 is arranged on an outer wall of the heating body 10. The heating body 10 is configured to heat the pot 200, and the decorative member 202 is sleeved on the side post body 201.

Accordingly, the pot 200 may include a pot body 210 and a pot side post 220. The pot body 210 is configured to accommodate the food to be cooked, and is arranged correspondingly to the heating body 10. The pot side post 220 is connected to an outer wall of the pot body 210, and is arranged correspondingly to or facing the side post body 201.

As shown in FIG. 1, the first control switch 240 is arranged on the pot side post 220. In some embodiments, the first control switch 240 may also be arranged on the pot body 210. In some embodiments, the pot 200 may also not include the pot side post 220, and the first control switch 240 is arranged on the pot body 210, which is not limited herein, and which may be selected by those skilled in the art according to actual needs.

In some embodiments, a color of the pot body 210 may be the same as that of the heating body 10. A color of the pot side post 220 may be the same as that of the decorative member 202. In addition, the colors of the pot side post 220 and the decorative member 202 may be different from the colors of the pot body 210 and the heating body 10, such that an appearance color of the cooking appliance 600 may be more eye-catching. Of course, the colors of these components are not limited herein, and may be selected by those skilled in the art according to actual needs.

As shown in FIG. 1, the cooking appliance 600 may further include a pot cover assembly 300. In some embodiments, the decorative member 202, the pot side post 220, and an outer shell of the pot cover assembly 300 may have the same color scheme, so as to visually connect the entire cooking appliance 600 as a whole and form the visual tone of the entire product.

In some embodiments, the pot 200 is arranged with an electrical component 230, such as an indicator light, a temperature sensor, etc. As shown in FIG. 1, the electrical component 230 may be arranged on the pot side post 220. In some embodiments, the electrical component 230 may also be arranged on the pot body 210. In some embodiments, some of the electrical component 230 may be arranged on the pot side post 220, and others of the electrical component 230 may be arranged on the pot body 210, which is not limited herein, and which may be selected by those skilled in the art according to actual needs.

As shown in FIG. 2, FIG. 2 is a schematic sectional view of the cooking appliance shown in FIG. 1. A transmitting coil board 203 is arranged on a side of the side post body 201 close to or adjacent to the pot side post 220. A receiving coil board 221 is arranged on a side of the pot side post 220 close to or adjacent to the side post body 201. The receiving coil board 221 cooperates with the transmitting coil board 203, so as to supply power to the electrical component 230 of the pot 200.

In some embodiments, the transmitting coil board 203 may be electrically connected to the power supply (not shown) of the heating assembly 100. The power supply provides high-frequency AC (alternating current) power to the transmitting coil board 203. Under the action of the high-frequency AC power, the transmitting coil board 203 may be capable of generating an alternating electromagnetic field that acts on the receiving coil board 221, such that an alternating current may be generated by the receiving coil board 221. The receiving coil board 221 is connected to the electrical component 230 of the pot 200 (such as the indicator light, the temperature sensor, etc.), so as to input current to the electrical component 230 of the pot 200, thereby enabling the electrical component 230 to work normally. That is, wireless power supply of the electrical component 230 of the pot 200 is achieved by means of arranging the transmitting coil board 203 on the side post body 201 and arranging the receiving coil board 221 on the pot side post 220.

As shown in FIG. 6, FIG. 6 is a partial structural schematic view of the heating assembly of the cooking appliance shown in FIG. 1. A sinking groove 20111 is defined on a side surface of the side post body 201 close to the pot side post 220, and is configured to accommodate the transmitting coil board 203. The decorative member 202 is sleeved on the side post body 201, and is configured to fix the transmitting coil board 203 in the sinking groove 20111. In some embodiments, a size of the sinking groove 20111 may be matched with a size of the transmitting coil board 203, such that the transmitting coil board 203 may be completely limited and unable to move. The assembly solution may omit a screw, a fastener, and other connection structures, such that a structure of the side post body 201 is simplified, and it facilities improving the assembly efficiency of the product.

In some embodiments, the heating main body may not include the side post body 201. The sinking groove 20111 may be arranged on a side surface of the heating body 10 close to the pot 200, the transmitting coil board 203 may be arranged in the sinking groove, and the decorative member may be sleeved on the entire heating body 10 to fix the transmitting coil board in the sinking groove.

In some embodiments, the heating assembly 100 may also not include the decorative member 202, and the transmitting coil board 203 may be fixed to the side post body 201 via a connecting structure such as a screw, a fastener, etc., which is not limited herein, and which may be selected by those skilled in the art according to actual needs.

In some embodiments, the first control switch 240 is configured to receive the control operation of the user and generate a corresponding electrical signal. In some embodiments, the first control switch 240 may be configured to generate the corresponding electrical signal when touched by the user, or the first control switch 240 may generate the corresponding electrical signal when pressed by the user, or the first control switch 240 may generate the corresponding electrical signal when rotated by the user, which is not limited herein, and which may be selected by those skilled in the art according to actual needs.

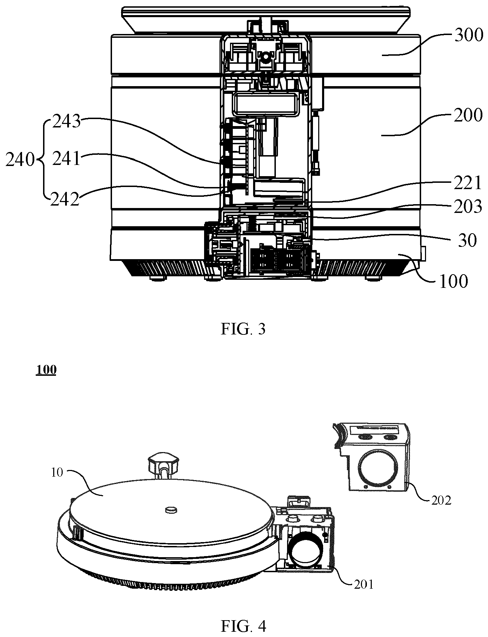

As shown in FIG. 3, FIG. 3 is another schematic sectional view of the cooking appliance shown in FIG. 1. The receiving coil board 221 is electrically connected to the first control switch 240, such as by means of a wire. The transmitting coil board 203 is electrically connected to the control circuit board 30 of the heating assembly 100, such as by means of a wire. The receiving coil board 221 cooperates or operates with the transmitting coil board 203, so as to transmit the electrical signal generated by the first control switch 240 and corresponding to the control operation of the user to the control circuit board 30 of the heating assembly 100.

As shown in FIGS. 1 and 3, the first control switch 240 may include a first touch key 241, a first touch spring 242, and a touch circuit board 243. The first touch key 241 is arranged on a surface of the pot 200, such as a surface of the pot side post 220. The first touch key 241 is configured to receive the control operation of the user and generate the electrical signal corresponding to the control operation of the user. In some embodiments, the first touch key 241 may be a capacitive touch switch or a resistive touch switch. The first touch spring 242 and the touch circuit board 243 may be arranged inside the pot side post 220. One end of the first touch spring 242 is electrically connected to the first touch key 241, and the other end of the first touch spring 242 is electrically connected to the touch circuit board 243, so as to transmit the electrical signal generated by the first touch key 241 and corresponding to the control operation of the user to the touch circuit board 243.

The touch circuit board 243 is electrically connected to the receiving coil board 221. The touch circuit board 243 is connected to the receiving coil board 221, such as by means of a wire. The touch circuit board 243 is configured to amplify the electrical signal generated by the first touch key 241 and corresponding to the control operation of the user, and transmit an amplified electrical signal to the receiving coil board 221.

Under the action of the amplified electrical signal, the receiving coil board 221 generates an induced magnetic field that acts on the transmitting coil board 203, such that an induced current corresponding to the electrical signal may be generated by the transmitting coil board 203. The transmitting coil board 203 transmits a corresponding induced current to the control circuit board 30 of the heating assembly 100, so as to control the heating assembly 100.

In some embodiments, the first control switch 240 may not include the first touch spring 242. The touch key 241 may be electrically connected to the touch circuit board 243 by means of a conductor in any form. In an embodiment, the first touch key 241 is directly welded on the touch circuit board 243, which is not limited herein, and which may be selected by those skilled in the art according to actual needs.

As mentioned above, the transmitting coil board 203 may be connected to the control circuit board 30 of the heating assembly 100 via a circuit. As further shown in FIG. 6, a terminal 2031 is arranged on a side of the transmitting coil board 203 close to the receiving coil board 221. The terminal 2031 is arranged on an end of the transmitting coil board 203 close to the heating body 10. The transmitting coil board 203 is connected to the control circuit board 30 of the heating assembly 10 via the terminal 2031.

In some embodiments, the sinking groove 20111 may be further arranged with a support member. The support member is configured to support the transmitting coil board 203, such that a side of the transmitting coil board 203 away from the heating body 10 may be inclined to a direction close to or facing the receiving coil board 221.

As mentioned above, the terminal 2031 is arranged on a side surface of the transmitting coil board 203 close to the receiving coil board 221, and is arranged on a side of the transmitting coil board 203 close to the heating body 10. Due to a certain height of the terminal 2031 (i.e., the height thereof is generally in a range from 10mm to 20mm), if the transmitting coil board 203 is substantially arranged parallel to the receiving coil board 221, a distance between the transmitting coil board 203 and the receiving coil board 221 cannot be further reduced due to presence/existence of the terminal 2031, resulting in affecting cooperation between the transmitting coil board 203 and the receiving coil board 221. By arranging the support member in the sinking groove 20111, the side of the transmitting coil board 203 away from the heating body 10 may be inclined to the direction close to the receiving coil board 221, which facilitates reducing the distance between the transmitting coil board 203 and the receiving coil board 221, thereby ensuring working performance of the transmitting coil board 203 and the receiving coil board 221.

In some embodiments, two support ribs 20112 are arranged at intervals on a bottom of the sinking groove 20111. The two support ribs 20112 may be served as the above-mentioned support member and configured to support the transmitting coil board 203. The two support ribs 20112 extend in a direction away from the heating body 10, and a height of each of the two support ribs 20112 gradually increases, such that the side of the transmitting coil board 203 away from the heating body 10 may be inclined to the direction close to the receiving coil board 221.

In some embodiments, one support rib 20112 may further be arranged on a side of the bottom of the sinking groove 20111 away from the heating body 10, such that the side of the transmitting coil board 203 close to the heating body 10 may abut against the bottom of the sinking groove 20111, and the side of the transmitting coil board 203 away from the heating body 10 is arranged on the support rib 20112. In this way, the side of the transmitting coil board 203 away from the heating body 10 may be inclined to the direction close to the receiving coil board 221. By arranging the support rib 20112, a gap is defined between the bottom of the sinking groove 20111 and the transmitting coil board 203, which facilitates dissipating heat for the transmitting coil board 203.

In some embodiments, the bottom of the sinking groove 20111 may also be arranged as an inclined surface, such that the side of the transmitting coil board 203 away from the heating body 10 may be inclined to the direction close to the receiving coil board 221.

In addition, the transmitting coil board 203 cooperates with the receiving coil board 221, and is further configured to transmit a temperature signal detected by the temperature sensor of the pot 200. In some embodiments, the temperature sensor is configured to monitor temperature inside the pot 200 in real-time, convert the temperature signal into an electrical signal, generate the alternating current via the receiving coil board, and generate the alternating magnetic field. A corresponding induced current may be generated by the transmitting coil board 203 of the side post body 201 under the action of the alternating magnetic field. Then, a chip of the circuit board 30 is controlled to decode the induced current, and convert the induced current into the temperature signal inside the pot 200, thereby controlling the heating body 10 based on the temperature signal.

The control circuit board 30 may control the heating body 10 based on the temperature inside the pot 200. In some embodiments, when the temperature inside the pot 200 is lower than a first threshold, the control circuit board 30 may turn on the heating body 10 or increase a heating power of the heating body 10, so as to increase the temperature inside the pot 200. When the temperature inside the pot 200 is greater than a second threshold, the control circuit board 30 may turn off the heating body 10 or reduce the heating power of the heating body 10, so as to decrease the temperature inside the pot 200.

In some embodiments, the value range of the first threshold may be from 80°C to 120°C, such as 80°C, 90°C, 100°C, 110°C, and 120°C, etc. The value range of the second threshold may be from 120 to 160°C, such as 120°C, 130°C, 140°C, 150°C, and 160°C, etc. A value of the first threshold and a value of the second threshold are not limited herein, which may be selected by those skilled in the art according to actual needs.

Of course, the above description of controlling the heating body 10 by the control circuit board 30 is only an example, and is not a limitation of the present disclosure. Within the scope easy to understand by those skilled in the art, those skilled in the art can make choices according to actual needs.

The heating assembly 100 will be described below, which may refer to the description of the heating assembly in the embodiments below for details.

As shown in FIG. 4, FIG. 4 is a structural schematic view of a heating assembly of the cooking appliance shown in FIG. 1. In some embodiments, the heating assembly 100 includes a heating main body and a decorative member sleeved on the heating main body. The heating main body may include the heating body 10 and the side post body 201. The decorative member 202 is sleeved on the side post body 201.

As shown in FIG. 4, the heating body 10 and the side post body 201 may be integrally formed. Of course, in some embodiments, the heating body 10 and the side post body 201 may also be arranged separately or independently or individually, or the heating body 10 and the side post body 201 is two individual parts. However, in case that the heating body 10 and the side post body 201 are arranged separately, the product has a poor product reliability and the following problems such as waterproofing, safety regulations, creepage distance, and structural strength may occur. Especially in terms of waterproofing, regardless of an assembly method for arranging the heating body 10 and the side post body 201, there will be a problem that water enters inside of the product along an assembly gap between the heating body 10 and the side post body 201, leading to damage or failure of the product function.

In a case that the heating body 10 and the side post body 201 are integrally formed, it facilitates improving an appearance effect of the heating assembly 100 by arranging the decorative member 202. A reason is that the decorative member 202 is arranged to enable the heating body 10 and the side post (including the side post body 201 and decorative member 202) to have different colors. Without the decorative member 202, it is difficult to realize dual-color injection molding of the heating body 10 and the side post body 201 due to the limitation of an existing technological process.

The heating assembly 100 may be a heating magnetic furnace. The heating body 10 may be arranged in a circular shape. The side post body 201 extends outward from the outer wall of the heating body 10. In some embodiments, the heating body 10 may also be arranged in a square shape, which is not limited herein, and which may be selected by those skilled in the art according to actual needs.

A structure of the heating body 10 is shown in FIG. 5, and FIG. 5 is an exploded structural schematic view of the heating assembly shown in FIG. 4. The heating body 10 includes a housing 101, a panel 102, and a heating source 103. The side post body 201 and the housing 101 are integrally formed. The panel 102 is covered on the housing 101. The panel 102 and the housing 101 cooperatively define an accommodating space to accommodate the heating source 103. In some embodiments, the heating source 103 may be a coil, which is not limited herein, and which may be selected by those skilled in the art according to actual needs.

The housing 101 may include a middle frame 1011 and a base 1012. As shown in FIG. 5, the middle frame 1011 and the base 1012 may be arranged separately. The base 1012 and the panel 102 are respectively arranged on two sides of the middle frame 1011.

Accordingly, the side post body 201 may include a first side post body 2011 and a second side post body 2012. As shown in FIG. 5, the first side post body 2011 and the second side post body 2012 may be arranged separately. In some embodiments, the first side post body 2011 and the middle frame 1011 may be integrally formed. The second side post body 2012 and the base 1012 may be integrally formed.

In some embodiments, the middle frame 1011 and the base 1012 may be integrally formed. Accordingly, the first side post body 2011 and the second side post body 2012 may also be integrally formed, which is not limited herein, and which may be selected by those skilled in the art according to actual needs.

As shown in FIGS. 5 and 7, FIG. 7 is a structural schematic view of a control circuit board of the heating assembly shown in FIG. 5. The control circuit board 30 of the heating assembly 100 is disposed in the side post body 201 and extends out of the side post body 201, so as to control the heating body 10.

In some embodiments, the first side post body 2011 and the second side post body 2012 may cooperatively define an accommodating cavity (not shown). The control circuit board 30 may be arranged in the accommodating cavity defined by the first side post body 2011 and the second side post body 2012. At least a part of a structure of the control circuit board 30 extends into the heating body 10, so as to control the heating body 10.

In some embodiments, the heating assembly 100 may further include a second control switch 420 electrically connected to the control circuit board 30. The first control switch 240 is connected to the second control switch 420.

In some embodiments, the first control switch 240 may be electrically connected to the second control switch 420. The first control switch 240 is configured to receive the control operation of the user and generate the corresponding electrical signal. The second control switch 420 is configured to receive the electrical signal generated by the first control switch 240 and transmit the electrical signal to the control circuit board 30 of the heating assembly 100, so as to control the heating assembly 100.

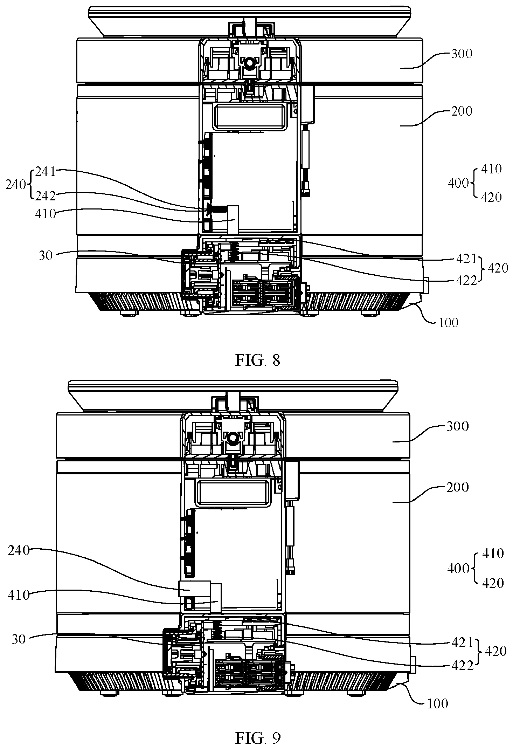

As shown in FIG. 8, FIG. 8 is another schematic sectional view of the cooking appliance shown in FIG. 1. The pot 200 may further include a transmission conductor 410. In some embodiments, the transmission conductor 410 may be arranged inside the pot side post 220. The second control switch 420 is arranged on the heating assembly 100 and electrically connected to the control circuit board 30 of the heating assembly 100. The first control switch 240 is electrically connected to the second control switch 420 via the transmission conductor 410.

As shown in FIGS. 1 and 8, the first control switch 240 may include the first touch key 241 and the first touch spring 242. The first touch key 241 is arranged on the surface of the pot 200, such as the surface of the pot side post 220. The first touch key 241 is configured to receive the control operation of the user and generate the electrical signal corresponding to the control operation of the user. In some embodiments, the first touch key 241 may be the capacitive touch switch or the resistive touch switch. The first touch spring 242 may be arranged inside the pot side post 220. One end of the first touch spring 242 is electrically connected to the first touch key 241, and the other end of the first touch spring 242 is electrically connected to the transmission conductor 410, so as to transmit the electrical signal generated by the first touch key 241 and corresponding to the control operation of the user to the transmission conductor 410.

The transmission conductor 410 may be a conductor in any form, such as an aluminum sheet or a wire. A structure and a material of the transmission conductor 410 are not limited herein, which may be selected by those skilled in the art according to actual needs.

The second control switch 420 may include a second touch key 421 and a second touch spring 422. The second touch key 421 is arranged on a side surface of the heating assembly 100 close to the pot 200, and is electrically connected to the transmission conductor 410 to receive the electrical signal from the transmission conductor 410. In some embodiments, the second touch key 421 may be a capacitive touch switch or a resistive touch switch. As shown in FIG. 8, the second touch key 421 may be arranged on a side surface of the decorative member 202 close to the pot side post 220.

The second touch spring 422 may be arranged in the side post body 201. One end of second touch spring 422 is electrically connected to the second touch key 421, and the other end of the second touch spring 422 is electrically connected to the control circuit board 30 of the heating assembly 100. The second touch spring 422 is configured to transmit the electrical signal received by the second touch key 421 to the control circuit board 30 of the heating assembly 100. The control circuit board 30 controls the heating body 10 to heat the pot 200 based on the electrical signal.

In some embodiments, the second touch key 421 may be further configured to receive another control operation of the user and generate an electrical signal corresponding to the another control operation of the user.

In some embodiments, the transmission conductor 410 may be an elastic member. In a compressed state, the transmission conductor 410 is capable of generating a certain amount of elastic force. The transmission conductor 410 may be pushed towards the second touch key 421 of the heating assembly 100 via the elastic force, which facilitates ensuring a reliable connection between the transmission conductor 410 and the second touch key 421.

As shown in FIGS. 1 and 9, FIG. 9 is another schematic sectional view of the cooking appliance shown in FIG. 1. In some embodiments, the first control switch 240 is a touch conductor. The touch conductor is capable of generating the electrical signal when touched by a human body. In some embodiments, the touch conductor may be a conductor in any form, such as an aluminum sheet or a copper sheet, as long as the conductor is capable of conducting electricity. A structure and a material of the touch conductor are not limited herein, which may be selected by those skilled in the art according to actual needs.

One end of the touch conductor is arranged on the surface of the pot 200, and is configured to receive the control operation of the user and generate the electrical signal corresponding to the control operation of the user. The other end of the touch conductor is electrically connected to the transmission conductor 410, so as to transmit the generated electrical signal to the transmission conductor 410.

In some embodiments, the first control switch 240 may also be a mechanical structure switch. The pot may further include a transmission member (not shown). In response to the control operation of the user, the first control switch 240 is configured to drive the transmission member to trigger the second control switch 420, so as to control the heating assembly 100. In some embodiments, the second control switch 420 is a touch switch or a membrane switch. the second control switch 420 is welded on the control circuit board 30. Under the force applied by the user, the first control switch 240 is configured to drive the transmission member to trigger the second control switch 420.

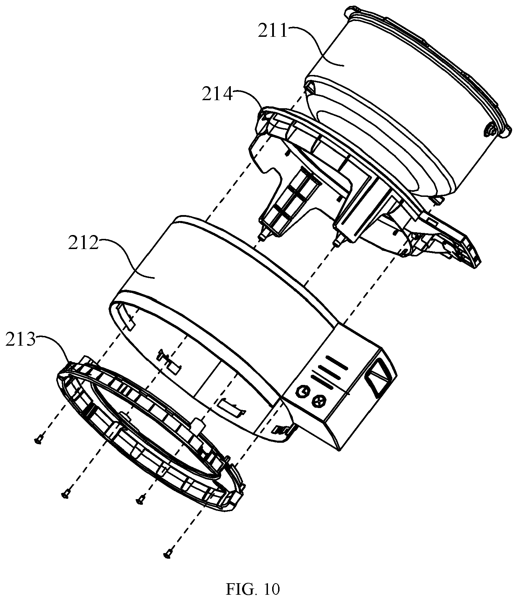

A structure of the pot 200 may be further described below. As shown in FIG. 10, FIG. 10 is a structural schematic view of a pot of the cooking appliance shown in FIG. 1.

In some embodiments, the pot body 210 may include an inner liner 211, an outer shell 212, a support base 213, and an outer shell cover 214. In some embodiments, the inner liner 211 is configured to accommodate the food to be cooked. The pedestal 213 and the outer shell 212 cooperatively define an accommodating space. The inner liner 211 is fixed in the accommodating space defined by the pedestal 213 and the outer shell 212 via the outer shell cover 214. The outer shell 212 and the pedestal 213 may be made of an insulation material, such that it may be possible to allow the user to place the pot 200 on a dining table after cooking, and prevent the table and the user from being scalding.

Terms "first", "second", and "third" in the present disclosure are used for descriptive purposes only, and shall not be interpreted as indicating or implying relative importance or implicitly specifying the number of an indicated technical feature. Therefore, a feature defined by the terms "first", "second", and "third" may explicitly or implicitly include at least one such feature. In the description of the present disclosure, "a plurality of' means at least two, such as two, three, and so on, unless otherwise expressly and specifically limited. All directional indications (such as up, down, left, right, forward, backward...) in the present disclosure are used only to explain relative positions and movements of components in a particular attitude (the attitude shown in the corresponding drawing). When the particular attitude is changed, the directional indications may be changed accordingly. Terms "include", "have", and any variation thereof, are intended to cover non-exclusive inclusion. For example, a process, a method, a system, a product or an apparatus including a series of operations or units is not limited to the listed operations or units, but may further include operations or units that are not listed, or may include other may or units that are inherently included in the process, the method, the product or the apparatus.

The above is only some embodiments of the present disclosure, not to limit the scope of the present disclosure. Any equivalent structure or equivalent process transformation made by using the contents of the specification and the accompanying drawings of the present disclosure, or directly or indirectly applied in other related technical fields, are included in the scope of the present disclosure in the same way.

## Claims

1. A cooking appliance, **characterized by** comprising:
a pot, comprising a first control switch; and
a heating assembly, configured to heat the pot and comprising a control circuit board, wherein the heating assembly and the pot are arranged separately;
wherein the first control switch is associated with the control circuit board, and the heating assembly is controlled.

2. The cooking appliance according to claim 1, wherein the heating assembly further comprises a second control switch electrically connected to the control circuit board, and the first control switch is connected to the second control switch.

3. The cooking appliance according to claim 2, wherein the pot further comprises a transmission conductor, and the first control switch is electrically connected to the second control switch via the transmission conductor.

4. The cooking appliance according to claim 3, wherein the first control switch comprises:
a first touch key, arranged on a surface of the pot;
a first touch spring, wherein an end of the first touch spring is electrically connected to the first touch key, and the other end of the first touch spring is electrically connected to the transmission conductor.

5. The cooking appliance according to claim 3, wherein the first control switch comprises a touch conductor, one end of the touch conductor is arranged on a surface of the pot, and the other end of the touch conductor is electrically connected to the transmission conductor.

6. The cooking appliance according to claim 3, wherein the second control switch comprises:
a second touch key, arranged on a side surface of the heating assembly close to the pot and electrically connected to the transmission conductor; and
a second touch spring, wherein one end of the second touch spring is electrically connected to the second touch key, and the other end of the second touch spring is electrically connected to the control circuit board.

7. The cooking appliance according to claim 2, wherein the pot further comprises a transmission member;
in response to a control operation of a user, the first control switch is configured to drive the transmission member to trigger the second control switch, and the heating assembly is controlled.

8. The cooking appliance according to claim 7, wherein the second control switch is a touch switch or a membrane switch, and the second control switch is welded on the control circuit board.

9. The cooking appliance according to claim 1, wherein the pot further comprises a receiving coil board electrically connected to the first control switch;
the heating assembly further comprises a transmitting coil board electrically connected to the control circuit board; and
the transmitting coil board cooperates with the receiving coil board, such that the first control switch is connected to the control circuit board.

10. The cooking appliance according to claim 9, wherein the first control switch comprises:
a first touch key, arranged on a surface of the pot, and configured to receive a control operation of a user and generate a corresponding electrical signal; and
a first touch spring, one end of the first touch spring being electrically connected to the first touch key; and
a touch circuit board, electrically connected to the other end of the first touch spring, wherein the touch circuit board is electrically connected to the receiving coil board, and the touch circuit board is configured to amplify the electrical signal and transmit an amplified electrical signal to the receiving coil board.

11. The cooking appliance according to claim 9, wherein the transmitting coil board cooperates with the receiving coil board and is further configured to supply power to an electrical component of the pot.

12. The cooking appliance according to claim 9, wherein the heating assembly comprises:
a heating main body, wherein a side of the heating main body close to the pot defines a sinking groove, and the transmitting coil board is arranged in the sinking groove; and
a decorative member, sleeved on the heating main body and configured to fix the transmitting coil board in the sinking groove.

13. The cooking appliance according to claim 1, wherein the heating assembly comprises a heating body, a side post body, and a decorative member, the side post body is arranged on a sidewall of the heating body, and the decorative member is sleeved on the side post body; and
the pot comprises a pot body and a pot side post, the pot body is arranged correspondingly to the heating body, the pot side post is arranged correspondingly to the side post body, and the first control switch is arranged on the pot side post.
